Europäisches Patentamt

European Patent Office

Office européen des brevets

(19)

(11) Numéro de publication:

**0 097 108**
A1

(12) # DEMANDE DE BREVET EUROPEEN

(21) Numéro de dépôt: 83420097.4

(22) Date de dépôt: 09.06.83

(51) Int. Cl.³: **B 29 D 7/24,** C 08 J 5/18

(30) Priorité: 10.06.82 FR 8210367

(43) Date de publication de la demande: 28.12.83
Bulletin 83/52

(84) Etats contractants désignés: **DE GB IT LU NL**

(71) Demandeur: **RHONE-POULENC FILMS, 25, quai Paul Doumer, F-92408 Courbevoie (FR)**

(72) Inventeur: **Jacquier, Marie-Odile, 7, chemin de l'Ile, F-01700 Miribel (FR)**

(74) Mandataire: **Bouvy, Aline et al, Rhône-Poulenc Recherches Centre de Recherches de Saint-Fons B.P. 62, F-69190 Saint-Fons (FR)**

(54) Procédé d'étirage longitudinal de film polyester préalablement étiré transversalement et film ainsi obtenu.

(57) L'invention concerne un procédé d'étirage longitudinal de film polyester préalablement étiré transversalement.

Le procédé est caractérisé en ce que l'étirage longitudinal est effectué en deux étapes d'étirage.

L'invention concerne également le film obtenu par la mise en oeuvre du procédé.

EP 0 097 108 A1

## PROCEDE D'ETIRAGE LONGITUDINAL DE FILM POLYESTER PREALABLEMENT ETIRE TRANSVERSALEMENT ET FILM AINSI OBTENU

L'invention concerne un procédé d'étirage longitudinal de film polyester préalablement étiré transversalement. Elle concerne également le film obtenu par la mise en oeuvre du procédé.

La présente invention est plus particulièrement un procédé d'étirage longitudinal de film polyester préparé à partir de polytéréphtalate d'éthylène.

Généralement les films préparés à partir de polytéréphtalate d'éthylène sont réalisés selon le procédé ci-après.

Le polyétéréphtalate d'éthylène fondu est extrudé à travers une filière plate et coulé sur un tambour de telle manière qu'à l'état solide le film soit substantiellement amorphe et non orienté. Les températures d'extrusion sont comprises entre 270 et 315 °C et le tambour de coulée est maintenu à une température comprise entre 20 et 60 °C pour effectuer une trempe rapide du matériau.

Le film amorphe ainsi obtenu est étiré dans la direction transversale, par l'intermédiaire d'un dispositif qui maintient le film sous tension à l'aide de pinces se déplaçant de façon telle que la distance entre les pinces comptée perpendiculairement à la direction de déplacement longitudinal du film croit selon ce déplacement. Cet étirage transversal est effectué dans un four à des températures généralement comprises entre 75 et 100 °C, et préférentiellement entre 85 et 95 °C.

De préférence l'étirage transversal est effectué jusqu'à un taux voisin de 3,5 fois la largeur du film amorphe.

Lorsque le film a été étiré transversalement. Il est soumis à un étirage dans la direction longitudinale jusqu'à entre 3,7 et 5 fois la longueur initiale du film amorphe. La température du film pour cette étape d'étirage est généralement comprise entre 80 et 120 °C.

Pour étirer le film longitudinalement on emploie généralement un groupe de rouleaux parallèles et horizontaux entraînés appelés rouleaux lents suivi d'un deuxième groupe de rouleaux parallèles et horizontaux entraînés à une vitesse plus élevée appelés rouleaux rapides. Un tel dispositif présente comme principal inconvénient de produire une diminution de largeur excessive du film.

Pour pallier cet inconvénient on a alors placé entre le dernier rouleau lent et le premier rouleau rapide un ou plusieurs rouleaux intermédiaires parallèles et horizontaux pouvant tourner librement autour de leurs axes, un tel procédé et un tel dispositif sont notamment décrits dans le brevet français 1 080 162.

Bien que ce procédé et ce dispositif donnent généralement satisfaction ils présentent l'inconvénient majeur de ne pas permettre la maîtrise de la vitesse de rotation des rouleaux intermédiaires et de ce fait de ne pas permettre la maîtrise du taux d'étirage entre le dernier rouleau lent et le premier rouleau intermédiaire et entre le dernier rouleau intermédiaire et le premier rouleau rapide.

Un but de la présente invention est un procédé d'étirage longitudinal d'un film préalablement étiré transversalement qui permette d'obtenir un film aux propriétés mécaniques, notamment une résistance à la traction, améliorée suivant la direction longitudinale.

Il a maintenant été trouvé un procédé d'étirage longitudinal de film polyester préalablement étiré transversalement, caractérisé en ce que ledit étirage longitudinal est effectué en deux étapes d'étirage.

Avantageusement dans une première étape on étire le film à un taux compris entre 1,05 et 2 et dans une deuxième étape on étire le film à un taux compris entre 4,2 et 2 pour obtenir un taux final d'étirage compris entre 4 et 5.

De préférence dans la première étape on étire le film à un taux compris entre 1,3 et 1,5 et dans la deuxième étape on étire le film à un taux compris entre 3,85 et 2,66 pour obtenir un taux final d'étirage compris entre 4 et 5.

Avantageusement dans le procédé d'étirage selon l'invention les deux étapes d'étirage sont réalisées à des températures différentes.

De préférence les températures sont telles que la température de la deuxième étape d'étirage est au moins égale à celle de la première étape d'étirage.

Ainsi la température de la première étape d'étirage est comprise entre 80 et 95 °C et la température de la deuxième étape d'étirage est comprise entre 90 et 120 °C.

De préférence la température de la première étape d'étirage est

0097108

comprise entre 82 et 88 °C et la température de la deuxième étape
d'étirage est comprise entre 92 et 98 °C.

Pour la mise en oeuvre du procédé d'étirage longitudinal de film
polyester objet de l'invention le dispositif d'étirage longitudinal est
constitué de rouleaux de préchauffage, qui sont les rouleaux lents,
suivis de deux groupes de rouleaux d'étirage, qui sont les rouleaux
rapides, le deuxième groupe de rouleaux d'étirage tournant à une vitesse
supérieure à celle du premier groupe. Tous les rouleaux sont entraînés
positivement et équipés de dispositifs pour éviter que le film ne glisse
sur les rouleaux.

Au cours de chaque étape d'étirage, le contrôle et l'ajustement
des températures du film sont effectués par l'intermédiaire du contrôle
et de l'ajustement des températures des rouleaux. Le chauffage du film
peut être ajusté à l'aide de rouleaux chauds supplémentaires, ou de
panneaux radiants, ou encore par soufflage d'air chaud.

Le film obtenu par la mise en oeuvre du procédé d'étirage
longitudinal objet de l'invention présente des propriétés mécaniques
selon la direction longitudinale du film améliorées par rapport aux
propriétés mécaniques d'un film obtenu par un procédé d'étirage
longitudinal en une seule étape.

Les meilleures caractéristiques d'orientation et de propriétés
mécaniques telles que module de traction longitudinal, force qui
correspond à un allongement longitudinal de 5 % et résistance à la
rupture dans la direction de l'étirage sont dues principalement au fait
que l'étirage longitudinal en deux étapes permet des vitesses
instantanées d'étirage à chacune des deux étapes inférieures à celles
rencontrées généralement au cours d'un étirage longitudinal au même taux,
en une seule étape.

De plus la température plus élevée de la deuxième étape de
l'étirage longitudinal favorise la cristallisation induite dans le sens
de l'étirage.

Il en résulte que l'abaissement du champ de contraintes dans le
sens de l'étirage longitudinal dû :
- aux vitesses instantanées d'étirage plus faibles et
- à la température plus élevée de la deuxième étape de l'étirage longitudinal, défavorables à l'obtention de bonnes propriétés mécaniques suivant la direction d'étirage longitudinal, est largement compensé par l'augmentation de la cristallinité et du taux d'orientation de la phase cristalline favorable à l'obtention de caractéristiques mécaniques élevées.

Du fait que, au cours de la deuxième étape, le champ de contraintes suivant la direction de l'étirage longitudinal est moins élevé, le taux d'étirage peut être augmenté, ce qui contribue encore davantage à l'augmentation de la cristallinité induite et de l'orientation de la phase cristalline, contribuant encore davantage à l'augmentation des caractéristiques mécaniques.

L'exemple comparatif ci-après illustre le procédé d'étirage longitudinal selon l'invention et met en évidence l'augmentation de caractéristiques mécaniques de film obtenu par la mise en oeuvre de ce procédé vis-à-vis de film obtenu par le procédé d'étirage longitudinal selon l'art antérieur.

EXEMPLE :

Un polyester dont la viscosité intrinsèque mesurée dans l'orthochlorophénol est égale à 0,64 dl/g est extrudé à travers une filière plate à 280 °C et coulé sur un tambour de coulée maintenu à 40 °C pour effectuer une trempe rapide du matériau.

Le film amorphe obtenu est introduit dans un four de préchauffage maintenu à une température de 95 °C où il est étiré transversalement jusqu'à un taux de 3,4 par l'intermédiaire d'un dispositif qui maintient le film sous tension à l'aide de pinces se déplaçant de façon telle que la distance entre les pinces comptée perpendiculairement à la direction de déplacement longitudinal du film croit selon ce déplacement.

Le film ainsi étiré transversalement est refroidi à 60 °C. Il est ensuite préchauffé par passage sur des rouleaux parallèles et horizontaux maintenus à une température de 82 °C, qui sont les rouleaux lents, puis est soumis à un étirage longitudinal effectué en deux étapes par passage sur deux groupes de rouleaux d'étirage.

Dans une première étape le film est étiré jusqu'à un taux de 1,3 par un premier groupe de rouleaux rapides maintenus à une température de 87 °C.

Dans une deuxième étape le film est étiré jusqu'à un taux de 3,1 par un deuxième groupe de rouleaux rapides maintenus à une température de 95 °C.

Ces deux étapes d'étirage correspondent à un taux final d'étirage longitudinal du film de 4.

Le film bi-étiré maintenu sous tension est ensuite thermofixé dans un four à une température de 200 °C.

Le film obtenu présente un module de traction longitudinal égal à 1 040 $kg/mm^2$ et une force de 24 $kg/mm^2$ correspond à un allongement longitudinal de 5 %.

Un film préparé, étiré transversalement et thermofixé dans des conditions identiques à celles décrites ci-avant est étiré longitudinalement en une seule étape entre des rouleaux lents et des rouleaux rapides à une température comprise entre 95 et 100 °C jusqu'à un taux d'étirage longitudinal égal à 4.

Le film obtenu présente un module de traction longitudinal égal à 760 $kg/mm^2$ et une force de 17 $kg/mm^2$ correspond à un allongement longitudinal de 5 %.

Comme on peut le constater les propriétés mécaniques du film obtenu par la mise en oeuvre du procédé d'étirage longitudinal selon l'invention sont supérieures à celles d'un film obtenu par le procédé d'étirage selon l'art antérieur.

REVENDICATIONS

1. - Procédé d'étirage longitudinal de film polyester préalablement étiré transversalement, caractérisé en ce que dans une première étape on étire le film à un taux compris entre 1,05 et 2 et que dans une deuxième étape on étire le film à un taux compris entre 4,2 et 2.

2. - Procédé d'étirage selon la revendication 1, caractérisé en ce que dans une première étape on étire le film à un taux compris entre 1,3 et 1,5 et que dans une deuxième étape on étire le film à un taux compris entre 3,85 et 2,66.

3. - Procédé d'étirage selon l'une quelconque des revendications 1 ou 2, caractérisé en ce que le taux d'étirage final est compris entre 4 et 5.

4. - Procédé d'étirage selon l'une quelconque des revendications précédentes, caractérisé en ce que les deux étapes d'étirage sont réalisées à des températures différentes.

5. - Procédé d'étirage selon la revendication 4, caractérisé en ce que les températures sont telles que la température de la deuxième étape d'étirage est au moins égale à celle de la première étape d'étirage.

6. - Procédé d'étirage selon la revendication 5, caractérisé en ce que la température de la première étape d'étirage est comprise entre 80 et 95 °C et la température de la deuxième étape d'étirage est comprise entre 90 et 120 °C.

7. - Procédé d'étirage selon la revendication 6, caractérisé en ce que la température de la première étape d'étirage est comprise entre 82 et 88 °C et la température de la deuxième étape d'étirage est comprise entre 92 et 98 °C.

8. - Film obtenu par la mise en oeuvre du procédé selon l'une quelconque des revendications 1 à 7.

## RAPPORT DE RECHERCHE EUROPEENNE

Office européen
des brevets

Numéro de la demande

EP 83 42 0097

### DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. 3) |
|---|---|---|---|
| X | US-A-3 261 903 (V.R. CARR) * En entier * | 1,4,8 | B 29 D 7/24<br>C 08 J 5/18 |
| X | GB-A-1 430 291 (TEIJIN) * Revendications 1,9-14,16-20; page 2, lignes 124-126,130; page 3, lignes 1-48 * | 1-8 | |
| X | FR-A-1 470 221 (NATIONAL DISTILLERS AND CHEMICAL CORP.) * Figure 1; résumé I * | 1 | |
| X | GB-A-2 087 302 (TEIJIN) * Revendication 7; figure 3; page 2, ligne 44 - page 3, ligne 10; page 4, ligne 53 - page 7, dernière ligne | 1,8 | |

DOMAINES TECHNIQUES RECHERCHES (Int. Cl. 3)

B 29 D
C 08 J

Le présent rapport de recherche a été établi pour toutes les revendications

| Lieu de la recherche | Date d'achèvement de la recherche | Examinateur |
|---|---|---|
| LA HAYE | 06-09-1983 | NESTBY K. |

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

 

& : membre de la même famille, document correspondant

OEB Form 1503. 03.82